## Europäisches Patentamt

## European Patent Office

## Office européen des brevets

(11) Veröffentlichungsnummer: **0 018 559**

**A1**

(12) # EUROPÄISCHE PATENTANMELDUNG

(21) Anmeldenummer: **80102094.2**

(22) Anmeldetag: **18.04.80**

(51) Int. Cl.³: **C 23 D 5/00**
**C 03 C 7/02**

(30) Priorität: **27.04.79 US 34360**

(43) Veröffentlichungstag der Anmeldung:
**12.11.80 Patentblatt 80/23**

(84) Benannte Vertragsstaaten:
**BE DE FR GB IT NL**

(71) Anmelder: **Mobay Chemical Corporation**
**Penn Lincoln Parkway West**
**Pittsburgh, Pennsylvania 15205(US)**

(72) Erfinder: **Biller, Larry N.**
**43 Cedar Knoll Road**
**Cockeysville Maryland 21030(US)**

(72) Erfinder: **Boston, Jeffrey L.**
**626 Western Drive**
**Wooster Ohio 44691(US)**

(72) Erfinder: **Uher, Joseph F.**
**2105 Triandos Drive**
**Timonium Maryland 21093(US)**

(74) Vertreter: **Bünemann, Gerhard, Dr. et al,**
**c/o Bayer AG Zentralbereich, Patente Marken und**
**Lizenzen**
**D-5090 Leverkusen 1, Bayerwerk(DE)**

(54) **Verfahren zum Emaillieren von kaltgewalztem Stahl ohne Vorbehandlung und emailliertes Stahlblech.**

(57) Es wird ein Verfahren zum Beschichten von sauberen, kaltgewalzten Stahlwerkstücken mit einer fest haftenden Emailschicht beschrieben, das darin besteht, daß man auf die Oberfläche des Werkstücks durch trockenen elektrostatischen Spritzauftrag oder als nassen vermahlenen Schlicker eine Grundemailmasse aufbringt, die eine Fritte enthält, die bei Temperaturen zwischen etwa 675°C und 1100°C schmelzbar ist und im wesentlichen aus Glasnetzwerkbildnern und Flußmitteln dafür besteht, einen niedrigen Gehalt an Material, das Eisenoxid des Trägermetalls ("indigenous iron oxide") liefert, aufweist, wenigstens ein oder mehrere haftungsfördernde Oxide von Nickel, Kobalt, Kupfer, Mangan oder Arsen in einem Anteil von etwa 3 bis 7 Gew.-% der Fritte enthält mit der Maßgabe, daß die Fritte zu wenigstens etwa 2 Gew.-% aus einem Haftoxid von Nickel, Kobalt oder einem Gemisch dieser Oxide besteht, und die die geschlossene Phase der Masse darstellende Fraktion unter solchen Bedingungen in Bezug auf Temperatur und Zeit aufschmilzt, daß die Masse in eine Emailschicht umgewandelt wird, während die Kristallisation einer wesentlichen Menge von gelöstem Eisenoxid in der Schicht ausgeschlossen wird.

Croydon Printing Company Ltd.

MOBAY CHEMICAL CORPORATION


Verfahren zum Emaillieren von kaltgewalztem Stahl
ohne Vorbehandlung und emailliertes Stahlblech


Die Erfindung betrifft ein Verfahren zum Emaillieren von kaltgewalztem Stahl ohne Vorbehandlung durch Auftrag einer speziellen Fritte entweder im elektrostatischen Spritzauftrag oder als nassen Schlicker. Die spezielle Fritte enthält etwa 3 bis 7 Gew.-% eines Haftoxids, wobei wenigstens etwa 2 Gew.-% der Fritte aus Nickeloxid, Kobaltoxid oder einem Gemisch dieser Oxide bestehen.

Die Herstellung von technisch einwandfreiem emailliertem Stahlblech erforderte bisher gewöhnlich umfangreiche Vorbereitungen des Stahls vor der Emaillierung, um Ausbildung guter Haftfestigkeit der Emailschicht am Stahl zu gewährleisten sowie das Auftreten verschiedener Arten von Oberflächenfehlern in der Emailschicht zu verringern. Die Ausbildung ausreichender Bindung oder Haftung der Emailschicht am Stahl wird zum großen Teil einer rauhen, geätzten Oberfläche des Stahls, die durch Vorbehandlungen wie Säurebeize, elektrolytische Beize, Oxidations-Reduktionsbehandlung und/oder Sandstrahlen oder Sanden ausgebildet wird, zugeschrieben. Von anderen Faktoren, von denen bekannt ist, daß sie die Haftung der Emailschicht am Stahl verbessern, z.B. vorherige Abscheidung anderer Materialien, z.B. Nickel, auf dem Stahl, Zusatz geringer Mengen (gewöhnlich insgesamt etwa 0,5 bis 2,0%) von als Haftmittel dienenden Metalloxiden, z.B. Kobaltoxid, Nickeloxid,

- 2 -

Manganoxid und Arsenoxid, zur Emailfritte während ihres Schmelzens, wird nicht angenommen, daß sie von sich aus eine zuverlässige oder intensive Haftung bewirken. Die Untersuchung des Haftmechanismus von Emailschichten an Stahl erstreckte sich über eine große Anzahl von Jahren und führte zu umfangreicher technischer Literatur, die beispielsweise in der umfangreichen Übersicht von L.S. O'Bannon in "The Adherence of Enamels, Glass, and Ceramic Coatings to Metals -- A Review", Battelle Memorial Institute 1962, zusammengestellt ist.

Um die Herstellung von einwandfreien emaillierten Stahlwerkstücken zu gewährleisten, die praktisch frei von Fehlern wie Poren, schwarzen Punkten und Stellen, Kupferköpfen, Fischschuppen u.dgl. sind, war es bei der großtechnischen Emaillierung notwendig, eine genau geregelte Säureätzung oder Beize vorzunehmen oder Spezialstähle, z.B. besonders kohlenstoffarmen (oder entkohlten) Stahl, mit Titan stabilisierten Stahl und andere Spezialstähle zu verwenden, die sämtlich mit einem Sonderpreis zu bezahlen sind und ferner weiterhin eine geregelte Säureätzung oder -beize erfordern. Der besonders erwünschte Stahl vom Kostenstandpunkt ist der gewöhnliche kaltgewalzte Flußstahl, jedoch ist große Sorgfalt beim Beizen oder Ätzen erforderlich, um sowohl praktisch fehlerfreie Emailoberflächen als auch gute Haftung der eingebrannten Emailschicht an der Stahlunterlage zu gewährleisten. Unter kaltgewalztem Stahl ist Stahl der verschiedenen Typen zu verstehen, bei denen die endgültige Größeneinstellung bei niedriger Temperatur, gewöhnlich bei Raumtemperatur, an zunderfreiem Stahl erfolgt. Ferner können kaltgewalzte Bleche, die zu emaillieren sind, aus Stahl mit maximal 0,1% Kohlenstoff hergestellt werden. Flußstahl, emaillierbares Eisen und entkohlter Stahl sind Stahltypen, die zu den kaltgewalzten Stählen gehören.

Mo 2072

Unter dem hier gebrauchten Ausdruck "kaltgewalzter oder kaltverformter Stahl" ist ferner in jedem Fall ein Stahl zu verstehen, der nicht durch Zusatz von Titan stabilisiert worden ist. Unter diesen Begriff fallen jedoch auch verschiedene Stahllegierungen, z.B. nichtrostende Stahlsorten (die zuweilen emailliert und in Wärmeaustauschern verwendet werden). Eindeutig nicht unter den Ausdruck "kaltgewalzter Stahl" fallen Stahlunterlagen, die mit Titan stabilisiert und mit Aluminium beruhigt sind und unter dem Warenzeichen "Ti-Namel" (Hersteller Inland Steel Corporation of East Chicago, Indiana, U.S.A.) im Handel sind. Als Beispiele kaltgewalzter Stähle, die durch Zusatz von Titan stabilisiert worden sind, sind die in den US-PSen 2 495 835 und 2 495 836 und in der verwandten CA-PS 446 049 beschriebenen, zu beschichtenden Stähle zu nennen. Wie dort festgestellt wird, haben diese Stähle einen Kohlenstoffgehalt von nicht mehr als 0,15% und enthalten Titan in einer zur Reaktion mit dem gesamten vorhandenen Kohlenstoff genügenden Menge, wobei das Titan im allgemeinen in einer Menge von 4 bis 30 Gew.-Teilen pro Teil Kohlenstoff vorhanden ist. Der Ausdruck "sauberer Stahl" dient zur Bezeichnung eines kaltgewalzten Stahls, der keinerlei Behandlung zur Aufrauhung, chemischen Reduktion, Entfernung von Zunder oder Abscheidung eines anderen Materials mit Ausnahme einer Behandlung zur Entfernung von Fett oder Schmutz beispielsweise durch heiße alkalische Reinigungsbäder unterworfen worden ist. Sehr gebräuchlich ist die Aufbringung von zwei (oder mehr) Emailschichten auf die Stahlunterlage nach der Beize und Vernickelung oder einer anderen wesentlichen Vorbehandlung der Oberfläche. In diesen Fällen wird die erste Schicht oder das Grundemail gewöhnlich besonders formuliert, um seine Haftung an der Stahlunterlage zu verbessern, indem haftfördernde Oxide oder Haftoxide eingearbeitet werden und seine Löslichkeit für Eisenoxid so erhöht wird, daß der größte Teil des auf der Stahlunter-

Mo 2072

lage während des Einbrennens der Emailschicht gebildeten Eisenoxids aus der Metall-Email-Grenzfläche durch Auflösen im Grundemail entfernt wird. Grundemailschichten sind gewöhnlich auf Grund der Anwesenheit von Haftoxiden dunkelfarbig. Die zweite Schicht oder das Deckemail erhält eine solche Zusammensetzung, daß die in der endgültigen Emailoberfläche gewünschten Eigenschaften, z.B. Farbe, chemische Beständigkeit, Einsatztemperatur usw., gesteigert werden, und die gewünschten Emaileigenschaften lassen sich in Zweischichtensystemen leichter erreichen, als wenn nur eine Einzelschicht verwendet wird, wie es zuweilen der Fall ist. Natürlich müssen das Deckemail und das Grundemail verträglich in bezug auf den Einbrenntemperaturbereich, den Wärmeausdehnungskoeffizienten usw. sein. Die Grundemailschicht wird normalerweise eingebrannt und gekühlt, bevor die Deckemailschicht aufgetragen wird, so daß ein zweites Einbrennen des Werkstücks erforderlich ist, um das Deckemail zu reifen (d.h. die für das fertige Produkt gewünschten Eigenschaften auszubilden), jedoch wurde auch bereits vorgeschlagen, sowohl die Grundemailmasse als auch die Deckemailmasse aufzutragen und beide dann gemeinsam in einem einzigen Einbrennprozeß einzubrennen, um sie gleichzeitig zu reifen.

Ein Verfahren, das zum Auftrag einer Grundemailschicht auf Metalloberflächen einschließlich Stahl ohne spezielle Vorbereitung der Unterlage durch Beizen, Sandstrahlen oder Sanden, chemische Reduktion oder Metallabscheidung vorgeschlagen wurde, wird in der US-PS 2 828 218 beschrieben. Dieses Verfahren erfordert das Einbrennen der Grundemailschicht zur Ausbildung einer "matten" (mat-like) Oberfläche, die das Ergebnis des Einbrennens der Grundemailschicht während einer so langen Zeit zu sein scheint, daß genügend Metalloxid, d.h. Eisenoxid im Falle des Emaillierens von Stahl, auf der Unterlage gebildet und dann in die Grundemailschicht gelöst wird, wobei

Mo 2072

- 5 -

die Grundemailschicht gesättigt wird, so daß das Oxid in der glasigen Grundsubstanz der Grundemailschicht während des anschließenden Kühlens des mit der Grundemailschicht überzogenen Metalls kristallisiert. Natürlich müssen die Einbrennbedingungen um so schärfer sein, je dicker die Grundemailschicht und je höher die Löslichkeit des Oxids darin ist, um die Grundemailschicht zu sättigen, damit das erforderliche matte Oberflächengefüge beim Abkühlen ausgebildet wird. Diese Auslegung der Erfindung der US-PS 2 828 218 wird durch die Beschreibung der Erfindung des gleichen Erfinders in der später eingereichten US-PS 2 786 782 bestätigt, wo gelehrt wird, daß die frühere Erfindung gemäß der US-PS 2 828 218 durch Einarbeiten von Eisenoxid und Zinkoxid in die Grundemailmasse verbessert werden kann, da sich hierdurch eine geringere Abhängigkeit von der Schichtdicke und dem Einbrenntemperaturbereich ergibt. Die Beschreibungen dieser beiden Erfindungen lehren, daß der Zusatz von Haftoxiden nicht notwendig ist, um ausreichende Haftung an der Metallunterlage auch ohne deren spezielle Vorbehandlung zu erreichen, daß aber diese Materialien zugesetzt werden können, falls gewünscht.

Eine in der DE-OS 27 10 263 beschriebene Masse kann ebenfalls als Grundemailschicht für ein Eisenwerkstück, das keiner Vorbehandlung unterworfen worden ist, verwendet werden. Diese Masse wird jedoch als hydrophil beschrieben und wird daher nur durch trockenen elektrostatischen Spritzauftrag auf die Werkstücke aufgebracht. Tatsächlich sprechen die Erfinder ausdrücklich die Warnung aus, daß die Fritte "nicht wirksam zusammen mit gemahlenen Präparaten und ähnlichen, die üblicherweise verwendet werden, um einen wäßrigen Schlicker für den Auftrag einer üblichen Grundemailschicht auf eine metallische Oberfläche zu erhalten, verwendet werden könnte." Die Erfinder beschreiben ferner die Einbeziehung gewisser Oxide in auf die geschmolzene Masse bezogenen Mengenbereichen, die der

Mo 2072

Haftung förderlich sind, speziell NiO im Bereich von 0,5 bis 1,6%, CuO im Bereich von 1 bis 12%, CoO im Bereich von 0% bis 1% und MnO im Bereich von 0% bis 5%. Schließlich wird die Masse als weiches Glas beschrieben, das typischerweise bei Temperaturen von 648°C (1200°F) oder niedriger in Schichten einer Dicke von 12 bis 51 μm verwendet wird.

Gegenstand der Erfindung ist ein vorteilhaftes Verfahren zum Beschichten eines sauberen, kaltgewalzten Stahlwerkstücks mit einer fest haftenden Emailschicht. Das Verfahren ist dadurch gekennzeichnet, daß man auf die Oberfläche des Werkstücks durch trockenen elektrostatischen Spritzauftrag oder als nassen vermahlenen Schlicker eine Grundemailmasse in Form einer Fritte aufbringt, die bei Temperaturen zwischen etwa 675 und 1100°C schmelzbar ist und im wesentlichen aus Glasnetzwerkbildnern und Flußmitteln dafür besteht, einen niedrigen Gehalt an Material, das Eisenoxid des Trägermetalls ("indigenous iron oxide") liefert, aufweist, wenigstens ein oder mehrere haftungsfördernde Oxide von Nickel, Kobalt, Kupfer, Mangan oder Arsen in einem Anteil von etwa 3 bis 7 Gew.-% der Fritte enthält mit der Maßgabe, daß wenigstens etwa 2 Gew.-% der Fritte ein Haftoxid von Nickel, Kobalt oder ein Gemisch dieser Oxide sind, und die die geschlossene Phase der Masse darstellende Fraktion unter solchen Bedingungen in bezug auf Temperatur und Zeit aufschmilzt, daß die Fritte wirksam in eine Emailschicht umgewandelt wird, während die Kristallisation einer wesentlichen Menge von gelöstem Eisenoxid in der Schicht ausgeschlossen wird.

Durch die Erfindung wird die Notwendigkeit aller Oberflächenbehandlungen mit Ausnahme der Reinigung oder Entfettung von Stahl im gewöhnlichen handelsüblichen Zustand vor dem Emaillieren ausgeschaltet. Die Erfindung ermöglicht die Verwendung von billigem kaltgewalztem Stahl und führt dennoch zu ausgezeichneter Haftfestigkeit oder Haftung des Emails am Stahl sowie guten Oberflächeneigenschaften der

- 7 -

eingebrannten Emailschicht, die im wesentlichen frei von sichtbaren Oberflächenfehlern ist. Die Vorteile der Ausschaltung der Beize und der Vernickelung des Stahls sind sehr bedeutsam sowohl hinsichtlich der Kosteneinsparungen als auch hinsichtlich der Lösung von Wasserverunreinigungsproblemen, die durch die Ableitung von Säurebeizlösungen, Spülwasser und ausgebrauchten Nickelsulfatbädern aufgeworfen werden.

Zur Durchführung des Verfahrens gemäß der Erfindung wird ein feinteiliger Versatz aus glasbildenden Rohstoffen wie Siliciumdioxid, Sodaasche, Borax und verschiedenen Zusatzstoffen einschließlich Netzwerkbildnern, modifizierenden Mitteln, Flußmitteln und/oder feuerfesten Materialien, die gewöhnlich zur Herstellung von Emailfritten verwendet werden, zusammen mit einem haftungsfördernden Metalloxid wie Nickel- oder Kobaltoxiden oder deren Gemischen mit Mangan-, Kupfer- oder Arsenoxiden gemischt, bei etwa 1040° bis 1150°C (1904 bis 2102°F) geschmolzen und in Wasser oder zwischen gegensinnig rotierenden wassergekühlten Walzen schnell abgeschreckt.

Auf Grund der sorgfältigen Wahl der Mengenanteile der Rohstoffe können Antimon- und Molybdänoxide wegen ihrer vorteilhaften Wirkungen auf die hergestellten Fritten zugesetzt werden. Von Antimonoxid wird angenommen, daß es die Oxidationsstufen einiger der anderen in der Fritte vorhandenen Oxide so beeinflußt, daß der Farbton der durch Auftrag der Fritten auf eine Eisenunterlage gebildeten Emailschicht weißer ist als normal. Ferner ist das Antimonoxid von Natur aus weiß. Durch die Anwesenheit von Molybdänoxid in der geschmolzenen Schicht der Fritten auf einer Eisenunterlage wird die Oberflächenspannung des geschmolzenen Glases verringert. Diese Verringerung ermöglicht eine bessere "Benetzung" der Unterlage durch die Emailschicht. Dies führt beim weiteren Einbrennen

Mo 2072

- 8 -

zur Reifung der Schicht zur Ausbildung einer besseren Bindung oder Haftfestigkeit. Zahlreiche andere Frittenrezepturen vermögen die Anwesenheit eines dieser Oxide oder beider nicht zu tolerieren und sind daher vom Zusatz zur Erzeugung überlegener Farbtöne oder Haftfestigkeiten ausgeschlossen. In der DE-OS 27 10 263 wird ausdrücklich vor der Einbeziehung von Antimon- und Molybdänoxiden gewarnt.

Die meisten üblicherweise verwendeten Frittenbestandteile ergeben ein Alkali- oder Erdalkaliborsilicatmaterial. Der Anteil des Haftoxids oder einer Vorstufe, z.B. des entsprechenden Carbonats, das beim Schmelzen das gewünschte Oxid bildet, wird so eingestellt, daß eine Glasfritte gebildet wird, die etwa 3 bis 7 Gew.-% des Metalloxids enthält, wobei wenigstens 2% Nickel- oder Kobaltoxid vorhanden sind. Das Gewicht der folgenden Oxidationsstufen wird nachstehend verwendet, um die Gewichtsprozentsätze der in der Fritte vorhandenen Oxide zu berechnen: $NiO$, $CoO$, $MnO$, $CuO$, $Sb_2O_3$, $As_2O_3$ und $MoO_3$. In jedem Fall handelt es sich bei der Angabe in Prozent um Gewichtsprozent für diese Oxidationsstufen. Die theoretische Nettoanalyse der Oxide der Fritte liegt innerhalb der folgenden Bereiche:

| Oxid | Gew.-% |
|---|---|
| $SiO_2$ | 25 - 45 |
| $Na_2O$ | 10 - 30 |
| $K_2O$ | 0 - 5 |
| $Li_2O$ | 0 - 5 |
| $B_2O_3$ | 0 - 25 |
| $CaO$ | 5 - 20 |
| $BaO$ | 0 - 20 |
| $Al_2O_3$ | 0 - 20 |
| $Sb_2O_3$ | 0 - 6 |
| $P_2O_5$ | 0 - 5 |

Mo 2072

| Oxid | Gew.-% |
|------|--------|
| CoO | 0 - 8 |
| NiO | 0 - 8 |
| CuO | 0 - 6 |
| MnO | 0 - 6 |
| $As_2O_3$ | 0 - 6 |
| $MoO_3$ | 0 - 6 |
| ZnO | 0 - 5 |
| F | 0 - 5 |

Diese Fritte wird dann in Wasser mit den üblichen Suspensionshilfsstoffen, z.B. Tonen, mit geeigneten Elektrolyten, z.B. Borax oder Kaliumcarbonat, und gegebenenfalls mit bis zu maximal etwa 10 Gew.-% (Trockenbasis) eines feuerfesten Materials wie Siliciumdioxid, Aluminiumoxid usw. gemahlen, wobei ein Schlicker oder eine Aufschlämmung der Fritte in Wasser entsteht, wobei die Fritte wesentlich feiner ist als etwa 74 µm (200 mesh U.S.-Standardsieb). Dieser Emailschlicker wird auf die zu emaillierende Stahloberfläche nach beliebigen gewünschten Verfahren, z.B. Naßspritzen, elektrostatischen Naßspritzauftrag, Tauchauftrag, Fluten oder Flow-Coating oder elektrophoretische Abscheidung aufgetragen, dann getrocknet, bei einer Temperatur von etwa 740 bis 900°C (1364 bis 1652°F) aufgeschmolzen und gekühlt. Die Fritte gemäß der Erfindung ist im allgemeinen in Wasser unlöslich, so daß sie im Gegensatz zu Fritten, die als hydrophil und wasserlöslich bezeichnet werden (wie es beim Schlicker gemäß der DE-OS 27 10 261 der Fall ist), als nasser Schlicker aufgebracht werden kann. Die Emailfritte gemäß der Erfindung hat einen genügend hohen Gehalt an wasserunlöslichem Siliciumdioxid und dennoch einen genügend niedrigen Gehalt an wasserlöslichen Bor-, Fluor-, Alkali- und Erdalkalioxiden, um mit Wasser gemischt werden zu können, ergibt jedoch gute Haftfestigkeit. Die gleiche Beziehung erfordert ferner eine höhere Aufschmelztemperatur als wasserlösliche Fritten. Das wasserlösliche Material gemäß der DE-OS
27 10 263 wird als sehr weiches Glas beschrieben, das bei
Temperaturen von 650°C oder weniger eine niedrige
Viskosität hat.

Als Alternative kann die Fritte trocken auf eine Teilchengröße von weniger als 74 µm (200 mesh U.S.-Standard-
sieb) (vorzugsweise etwa 30 bis 74 µm) gemahlen, vorzugsweise mit einem Silicon, z.B. einem Polymethylhydrogensiloxan oder einem ähnlichen Material, umhüllt, als trokkenes Pulver durch elektrostatischen Spritzauftrag auf
Stahl aufgebracht und dann in der oben beschriebenen Weise
aufgeschmolzen werden. Vorteilhaft kann eine zweite Schicht
oder Deckemailschicht durch trockenen elektrostatischen
Spritzauftrag aufgebracht werden, und die beiden Schichten können gleichzeitig in einem einmaligen Zweischichten-
Einbrennprozeß aufgeschmolzen werden. Die Emails gemäß
der Erfindung können auch in nicht-wäßrigen Trägern auf
ungebeizte Stähle aufgetragen werden, beispielsweise in
einem "coil"-Beschichtungsverfahren, bei dem organische
Medien verwendet werden;siehe US-PS 3 906 125. In allen
Fällen braucht das kaltgewalzte Stahlwerkstück, wenn es
nicht mit losem oder außergewöhnlich starkem Rost bedeckt
ist, lediglich entfettet oder zur Entfernung von Ölen und
Oberflächenschmutz gereinigt zu werden, beispielsweise
mit Hilfe eines heißen alkalischen Reinigungsbades oder
als Entfettungsmittel dienenden Lösungsmitteldämpfen.
Keine Beize, kein Abschleifen, keine chemische Reduktion
oder Abscheidung von anderem Material wie Metall sind
erforderlich, um den Stahl für die Emaillierung nach dem
Verfahren gemäß der Erfindung vorzubereiten.

Die Zusammensetzung der in der Grundemailmasse verwendeten Fritte kann in weiten Grenzen innerhalb der vorgeschriebenen Bereiche variieren, wobei dennoch eine intensiv haftende Grundemailschicht gebildet wird. Der Gehalt

Mo 2072

an haftungsfördernden Metalloxiden und etwaigen Eisenoxiden muß jedoch innerhalb der engeren Bereiche gehalten werden, um die Haftung zu gewährleisten. Die Fritte enthält solche geringen Mengen an Eisenoxid lieferndem Mate-rial, daß in der aufgeschmolzenen Grundemailschicht der Eisenoxidgehalt so niedrig ist, daß fast das gesamte Eisenoxid in der glasigen Phase bleibt und keine wesentliche Eisenoxidmenge als Kristall wie aus einer mit Eisenoxid gesättigten glasigen Phase ausgefällt wird. Das hier erwähnte Eisenoxid gilt im allgemeinen als Eisen(II)-oxid, d.h. $FeO$, jedoch kommen Eisenoxide in einer höheren Oxida-tionsstufe, z.B. $Fe_2O_3$ oder $Fe_3O_4$, ebenfalls infrage und fallen hinsichtlich dieser Begrenzung unter den Begriff "Eisenoxid". Die Fritte kann auch den weicheren Grundemailfritten des Handels ähneln, außer daß sie höhere Anteile von etwa 3 bis 7% eines Haftoxids, z.B. Nickeloxid oder Kobaltoxid oder deren Gemische mit Mangan-, Kupfer oder Arsenoxid in solchen Mengenverhältnissen enthält, daß die Fritte wenigstens etwa 2 Gew.-% Nickeloxid oder Kobaltoxid enthält. Bei den bevorzugten Ausführungsformen der Erfindung zeigt sich, daß Emails, die im Temperaturbereich von etwa 740 bis 900°C (1364 bis 1652°F) reifen (d.h. die für das fertige Produkt gewünschten Eigenschaften entwickeln), überlegene Haftfestigkeit am Stahl im Vergleich zu Fritten, die bei höheren oder niedrigeren Temperaturen schmelzen oder reifen, zur Folge haben. Der Fachmann erkennt somit, daß Emails, die relativ höhere Anteile von Alkalioxid und niedrigere Anteile von feuerfesten Stoffen und Netzwerkbildnern enthalten, diese bei niedrigeren Temperaturen reifenden Emails bilden.

1 Gew.-Teil Fritte gemäß der Erfindung kann auch mit bis zu 4 Gew.-Teilen üblicher Emailfritte oder Emailfritten vor dem Auftrag auf eine Metallunterlage gemischt werden. Eine einwandfreie Haftung wird immer noch ohne Vorbehandlung zwischen dem Metall und dem Email ausgebildet, auch

Mo 2072

- 12 -

wenn der Gesamtanteil von Haftoxiden in der Gesamtemailschicht verringert wird. Eine Festlegung auf eine Theorie
ist nicht beabsichtigt, jedoch wird angenommen, daß, wenn
die Fritten gemischt werden, eine nicht-homogene Schicht
entsteht. Der lokalisierte Bereich hoher Konzentration
der Fritte gemäß der Erfindung entwickelt somit eine ausreichende Haftung an der Metallunterlage. Dann "heften"
sich die anderen Fritten an diesen lokalisierten Bereich
sowie das Metall, und die Folge ist eine fest haftende
Emailschicht.

Der Fachmann auf dem Gebiet der Aufstellung von Rezepturen von Fritten zum Emaillieren von Metallunterlagen ist
ohne weiteres in der Lage, Zusammensetzungen für die
Zwecke der Erfindung anzupassen und einzustellen. Gewöhnlich wird eine Testschmelzung vorgenommen, um die optimalen Einbrenn- und Kühlprogramme festzulegen, und eines
der Kriterien in der Aufstellung solcher Programme für die
Zwecke der Erfindung ist das Erfordernis, daß die gebildete Emailgrundschicht keine wesentlichen Mengen von
Eisenoxidkristallen während des Einbrennens oder Kühlens
ausfällen lassen darf. Wenn die Grundschicht vor dem
Auftrag einer Deckschichtmasse aufgeschmolzen wird,
erfordert dies gewöhnlich nur die äußerst genaue visuelle
Prüfung, um sich davon zu überzeugen, daß die Oberfläche
glatt und glasartig ist. Wenn zwei Schichten in einem
einzigen Prozeß eingebrannt werden, kann es erforderlich
sein, die Testbleche mit den aufgeschmolzenen Schichten
zu zerschneiden, um festzustellen, ob die Grundschicht
wesentliche Mengen von Eisenoxidkristallen enthält, und
dies kann auch bei Verfahren, bei denen die zwei Schichten einzeln nacheinander eingebrannt werden, zweckmäßig
sein, wenn irgendein Anlaß zur Besorgnis besteht, daß
aus der Grundschicht wesentliche Mengen von Eisenoxidkristallen während des Reifens der Deckemailschicht ausgefällt werden könnten, auch wenn dies während des vor-

C018559

- 13 -

herigen Aufschmelzens der Grundschicht nicht der Fall war.

Die örtliche Prüfung zur Feststellung, ob Eisenoxidkristalle in bedeutender Zahl gebildet worden sind, beruht darauf, daß nach der Bildung von Kristallen in bedeutender Anzahl die Oberfläche der Grundemailschicht nicht mehr das Licht zum Beobachter in der gleichen Weise reflektiert. Es ist dann keine schimmernde, hochglänzende Oberfläche mit Spitzenlichtern vorhanden, sondern die Kristalle zerstreuen das Licht, und die Oberfläche nimmt ein mattes Aussehen an. Wenn irgendein Zweifel entsteht, ob Kristalle in wesentlicher Anzahl gebildet worden sind, wird die mikroskopische Untersuchung der Emailschicht, eine Routinemethode bei der Emaillierung, angewandt, um die Beobachtungen durch Inaugenscheinnahme zu bestätigen. Die Untersuchung der Emailgrundschicht, in der nur wenige Kristalle gebildet worden sind, unter dem Mikroskop zeigt eine rauhe Email/Metall-Grenzfläche und nur einige wenige kleine Bereiche von anderer Farbe in der Grundemailschicht. Eine andere Farbe stellt natürlich die feinen Eisenoxidkristalle dar.

Die Regelung der Aufschmelzbedingungen nach dem Auftrag der Fritte und - in Abhängigkeit von der Wahl zwischen Einbrand- und Zweibrandverfahren- der Zusammensetzung der Deckemailmasse ist notwendig, um Eisenoxidkristallisation zu verhindern. Übermäßig langes Brennen, übermäßig hohe Schmelztemperaturen oder beides in Kombination können dazu führen, daß der Luftsauerstoff die verflüssigten aufgetragenen Schichten durchdringt und übermäßig große Eisenmengen in der Unterlage oxidiert. Wenn das Eisen oxidiert ist, wandert es in die aufgetragenen Schichten. Nach übermäßig langem Einbrennen ist zuviel oxidiertes Eisen in die Schichten gewandert und kristallisiert, wenn die emaillierte Unterlage gekühlt wird. Die Aufschmelztemperaturen können im Bereich von etwa

Mo 2072

BAD ORIGINAL

- 14 -

675 bis 1100$^{o}$C (1247 bis 2012$^{o}$F) liegen und dennoch gute Haftung der Fritte an der Unterlage zulassen, obwohl das Werkstück bei den höheren Temperaturen einer Deformierung unterliegt. Bei normalen technischen Einbrenntemperaturen von etwa 740 bis 900$^{o}$C (1364 bis 1552$^{o}$F) müßte die Einbrennzeit auf etwa 30 Minuten verlängert werden, um wesentliche Mengen von Eisenkristallen beim Abkühlen zu bilden. Bei Aufschmelztemperaturen, die höher sind als normal, braucht die Zeit nicht so lang zu sein, um Ausfällung wesentlicher Mengen von Kristallen zu bewirken. Wenn Eisenoxid in der Fritte von vornherein in höheren Mengen als Spurenmengen vorhanden ist, brauchen natürlich die übermäßig langen Brandzeiten nicht so lang zu sein.

Schließlich hat die Dicke der aufgeschmolzenen Schicht sowohl während des Einbrennens als auch beim Kühlen einen Einfluß darauf, ob Eisenkristalle gebildet werden. Eine dickere Emailschicht begrenzt während des Aufschmelzens die Sauerstoffmenge, die durch die Emailschichten zur Oberfläche der Unterlage durchdringt und schränkt somit die Bildung von Eisenoxiden und ihre Wanderung in die Emailschichten ein. Ferner ist die Zahl der Eisenkristalle, die gebildet werden, um so geringer, je dicker die Schicht beim Abkühlen ist, da die dickere Schicht in höherem Maße die Fähigkeit hat, mehr Eisenoxide zu absorbieren. Die Dicke der Schichten im Falle der Beispiele 1 bis 11, wo die Frittemassen durch trockenen elektrostatischen Spritzauftrag aufgebracht werden und das Werkstück nur einmal gebrannt wird, betrug etwa 51 µm (2 mils) vor und 12,7 bis 38 µm (0,5-1,5 mils) nach dem Brennen. Dünnere Schichten haben natürlich den Vorteil, daß geringere Frittenmengen verwendet werden, um die gleiche Oberflächengröße zu beschichten. Die erforderliche praktische Mindestdicke der aufgeschmolzenen Schicht, um gute Haftung an der Unterlage zu erzielen, beträgt ca. 12,7 µm (0,5 mils). Wenn die Beschichtungsmassen nach anderen Verfahren unter Verwen-

Mo 2072

dung nasser Schlicker aufgetragen werden, ist die aufgeschmolzene Schicht etwa 102 µm (4 mils) dick und unterliegt somit weniger den Problemen, die die Kristallisation von Eisenoxid aufwirft.

Nicht alle für die technische Verwendung vorgeschlagenen Fritten haben die Fähigkeit, Kristallisation von Metalloxiden in eingebrannten Schichten auszuschließen, wobei dies bei einigen ohne Rücksicht darauf, wie dick die eingebrannte Schicht ist, der Fall ist. Das in der DE-OS 27 10 263 beschriebene Material leidet gerade unter diesem Problem. In den vorgeschlagenen Schichtdicken bilden sich Kristalle. Offensichtlich bestehen die Kristalle aus Nickelmetall. Dies würde darauf hindeuten, daß bei Anwesenheit von zuviel Nickel Probleme in der Erzielung guter Haftung entstehen.

Tatsächlich bestanden Schichten unterschiedlicher Dicke aus diesem Material einen Haftungstest auf der Grundlage des Aufpralls eines 2,27 kg- (5 lbs.)-Fallgewichts, das aus einer Höhe von etwa 42 cm (16,5 Zoll) fallen gelassen wurde, nicht (siehe Beispiele 1 bis 10).

In der Praxis der Erfindung müssen natürlich die Stahloberflächen frei von sehr starken Rostschichten sein und dürfen keinen ähnlichen außergewöhnlich schlechten Oberflächenzustand aufweisen, um die Notwendigkeit zum Beizen, Sandstrahlen oder anderer Methoden zur Vorbereitung der Oberflächen zum Emaillieren wirksam auszuschalten. Kaltgewalzte Stähle können und werden häufig vom Hersteller vor dem Versand leicht eingeölt, und diese Behandlung verhindert gewöhnlich wirksam starke Rostbildung. Das Öl läßt sich durch ein heißes alkalisches Reinigungsbad oder durch Entfetten mit Lösungsmitteldämpfen leicht entfernen.

Mo 2072

## Beispiele 1 bis 10

Bei jeder der in Tabelle I und I-A genannten Frittenmassen wurden die feinteiligen Rohstoffe eingewogen, in einem V-Mischer gemischt, in einen heißen rotierenden Ofen aufgegeben, auf etwa 1040 bis 1150°C (1904 bis 2102°F) erhitzt, bis die Masse vollständig geschmolzen und frei von etwaigen kristallinen Rohstoffen war, und dann in Wasser gegossen, wobei eine Glasfritte gebildet wurde. Diese Fritte wurde in trockener Form unter Verwendung von 1200 g Fritte mit etwa 1,2 ml eines Polydimethylsiloxans (SWS-101, Hersteller Stauffer Chemical Company) auf eine solche Feinheit gemahlen, daß nur etwa 5 bis 10% auf einem 44 μm-Sieb (325 mesh, U.S. Standard) zurückblieben. Dieser trocken gemahlene Puder wurde dann auf kaltgewalzten Flußstahl aufgetragen, der lediglich durch Reinigen in einem heißen alkalischen Reinigungsbad vorbereitet worden war. Der Auftrag dieser Grundemailschichtmassen, die aus den in Tabelle I und I-A genannten Fritten gebildet worden waren, erfolgte durch trockenes elektrostatisches Spritzen. Das typische Auftragsgewicht dieser ersten Grundschicht betrug etwa 64,6 g/m² (6 g/Quadratfuß). In allen Fällen wurde eine zweite Schicht ebenfalls durch trockenen elektrostatischen Spritzauftrag unmittelbar unter Verwendung einer üblichen, mit Titandioxid getrübten Deckemailschichtmasse des handelsüblichen Typs aufgebracht. Diese abschließende Deckemailschicht war für den Erfindungsgedanken nicht kritisch oder wichtig, außer daß ein Deckemail gewählt werden sollte, das im allgemeinen Bereich von 740 bis 900°C (1364 bis 1652°F), der die große Mehrzahl verfügbarer handelsüblicher Deckemails umfaßt, reift und einen Wärmeausdehnungskoeffizienten haben sollte, der mit dem des Grundemails verträglich, d.h. ihm gleich oder etwas niedriger ist, so daß die unterschiedliche Kontraktion der beiden Schichten beim Abkühlen nach dem Einbrennen die Deckemailschicht nicht mehr als einer geringen Dehnungsbeanspruchung und sie vorzugsweise statt

Mo 2072

- 17

dessen einer mäßigen Druckspannung unterwirft. Die beschichteten Stahlbleche wurden dann bei 805°C (1480°F) entweder 3 Minuten oder, wie in den Beispielen 6 bis 10, sowohl 3 als auch 5 Minuten gebrannt, dann gekühlt und auf Haftung und Oberflächenbeschaffenheit untersucht. Die Haftung wurde nach der vom Porcelain Enamel Institute in T-29 (1972) beschriebenen Fallgewichtsmethode bestimmt. Die Oberflächenbeschaffenheit wurde durch Inaugenscheinnahme bewertet, wobei nach etwaigen gewöhnlichen Fehlern wie Poren, schwarzen Punkten und Blasen gesucht und auf Oberflächenglätte geachtet wurde.

Mo 2072

## T a b e l l e   I

Zusammensetzung des Schmelzversatzes (Gew.-%)

| Beispiel | 1 | 2 | 3 | 4 | 5 | 6 | 7 | 8 | 9 | 10 |
|---|---|---|---|---|---|---|---|---|---|---|
| $SiO_2$ | 23,8 | 23,1 | 23,5 | 23,5 | 23,3 | 17,3 | 16,6 | 19,1 | 18,4 | 18,7 |
| $Na_2B_4O_7$ | 22,7 | 22,1 | 22,5 | 22,5 | 22,3 | 26,1 | 25,2 | 19,1 | 18,4 | 18,7 |
| $NaNO_3$ | 2,2 | 2,1 | 2,2 | 2,2 | 2,2 | 2,3 | 2,1 | — | — | — |
| $Na_2CO_3$ | 12,8 | 12,4 | 12,7 | 12,7 | 12,5 | 16,1 | 15,5 | 6,0 | 5,8 | 5,9 |
| $CaF_2$ | 7,2 | 7,0 | 7,2 | 7,2 | 7,1 | 7,4 | 7,1 | 8,7 | 8,5 | 8,6 |
| $Co_3O_4$ | — | — | 2,4 | — | 2,9 | — | — | — | — | — |
| $NiO$ | 3,9 | 6,9 | — | 2,4 | 3,0 | 3,0 | 6,7 | 2,0 | 5,9 | 4,0 |
| $Cu_2O$ | — | — | 2,4 | 2,4 | — | — | — | — | — | — |
| $CaCO_3$ | 7,2 | 6,9 | 7,1 | 7,1 | 7,0 | 7,3 | 7,0 | — | — | — |
| $Sb_2O_3$ | 0,2 | 0,2 | 0,2 | 0,2 | 0,2 | 0,2 | 0,2 | — | — | — |
| $BaCO_3$ | 5,6 | 5,4 | 5,5 | 5,5 | 5,5 | 5,7 | 5,5 | 16,4 | 15,8 | 16,2 |
| Neph. Sy. | 1,0 | 1,0 | 1,0 | 1,0 | 1,0 | 1,0 | 1,0 | 18,4 | 17,7 | 18,0 |
| $K_2CO_3$ | 3,3 | 3,2 | 3,3 | 3,3 | 3,3 | 3,4 | 3,3 | — | — | — |
| $Na_5P_3O_{10}$ | 0,7 | 0,6 | 0,7 | 0,7 | 0,7 | 0,7 | 0,7 | 1,7 | 1,6 | 1,9 |
| Spodumen | 9,4 | 9,1 | 9,3 | 9,3 | 9,2 | 9,5 | .9,1 | — | — | — |
| $ZnO$ | — | — | — | — | — | — | — | 3,1 | 3,0 | 2,9 |
| $Na_2SiF_6$ | — | — | — | — | — | — | — | 1,4 | 1,3 | 1,4 |
| $Li_2CO_3$ | — | — | — | — | — | — | — | 2,0 | 1,6 | 1,6 |
| $K_2SiF_6$ | — | — | — | — | — | — | — | 2,1 | 2,0 | 2,1 |
| Insgesamt | 100,0 | 100,0 | 100,0 | 100,0 | 100,0 | 100,0 | 100,0 | 100,0 | 100,0 | 100,0 |

## T a b e l l e   I-A

### Zusammensetzung der Fritten – Theoretische Netto-Oxydanalyse

(Gew.-%)

| Beispiel | 1 | 2 | 3 | 4 | 5 | 6 | 7 | 8 | 9 | 10 |
|---|---|---|---|---|---|---|---|---|---|---|
| $SiO_2$ | 34,5 | 33,3 | 34,0 | 34,0 | 33,7 | 27,7 | 26,4 | 33,7 | 32,3 | 32,9 |
| $Na_2O$ | 17,8 | 17,1 | 17,6 | 17,6 | 17,4 | 21,5 | 20,6 | 13,3 | 12,7 | 13,1 |
| $K_2O$ | 2,7 | 2,6 | 2,7 | 2,7 | 2,7 | 2,8 | 2,7 | 1,9 | 1,8 | 1,8 |
| $Li_2O$ | 0,6 | 0,6 | 0,6 | 0,6 | 0,6 | 0,7 | 0,6 | 0,9 | 0,7 | 0,7 |
| $B_2O_3$ | 17,8 | 17,2 | 17,6 | 17,5 | 17,4 | 20,8 | 19,9 | 14,2 | 13,6 | 13,8 |
| $CaO$ | 10,3 | 9,9 | 10,3 | 10,2 | 10,1 | 10,7 | 10,2 | 6,7 | 6,5 | 6,6 |
| $BaO$ | 4,9 | 4,7 | 4,8 | 4,8 | 4,8 | 5,1 | 4,9 | 13,6 | 13,1 | 13,4 |
| $Al_2O_3$ | 3,1 | 3,0 | 3,0 | 3,0 | 3,0 | 3,1 | 3,0 | 4,7 | 4,5 | 4,6 |
| $Sb_2O_3$ | 0,2 | 0,2 | 0,2 | 0,2 | 0,2 | 0,2 | 0,2 | – | – | – |
| $P_2O_5$ | 0,5 | 0,4 | 0,5 | 0,5 | 0,5 | 0,5 | 0,5 | 1,1 | 1,0 | 1,2 |
| $CoO$ | – | – | 2,5 | – | 3,0 | – | – | – | – | – |
| $NiO$ | 4,4 | 7,7 | – | 2,7 | 3,4 | 3,4 | 7,6 | 2,1 | 6,2 | 4,2 |
| $CuO$ | – | – | 2,9 | 2,9 | – | – | – | – | – | – |
| $ZnO$ | – | – | – | – | – | – | – | 3,3 | 3,2 | 3,1 |
| $F$ | 2,9 | 2,8 | 2,9 | 2,9 | 2,9 | 3,0 | 2,9 | 4,3 | 4,2 | 4,3 |
| Verschiedene[x] | 0,3 | 0,5 | 0,4 | 0,4 | 0,3 | 0,5 | 0,5 | 0,2 | 0,2 | 0,3 |
| Insgesamt | 100,0 | 100,0 | 100,0 | 100,0 | 100,0 | 100,0 | 100,0 | 100,0 | 100,0 | 100,0 |

[x]Zufällige Verunreinigungen, die nicht absichtlich zugesetzt wurden, gewöhnlich weniger als je 0,1%. Hierzu gehören SrO (aus Bariumcarbonat), Eisenoxide und MgO als größere Verunreinigungen.

## T a b e l l e   II

### Auftragsmethode und Ergebnisse

| Beispiel | 1 | 2 | 3 | 4 | 5 | 6 | 7 | 8 | 9 | 10 |
|---|---|---|---|---|---|---|---|---|---|---|
| Auftrags-methode | TES[x] | TES | TES | TES | TES | TES | TES | TES | TES | TES |
| Zahl der Schichten | 2 | 2 | 2 | 2 | 2 | 2 | 2 | 2 | 2 | 2 |
| Zweite Schicht | TiCC[xx] | TiCC | TiCC | TiCC | TiCC | TiCC | TiCC | TiCC | TiCC | TiCC |
| Brennzeit, Minuten | 3 | 3 | 3 | 3 | 3 | 3 & 5 | 3 & 5 | 3 & 5 | 3 & 5 | 3 & 5 |
| Brenn-temp. $^{o}C$ | 805 | 805 | 805 | 805 | 805 | 805 | 805 | 805 | 805 | 805 |
| $^{o}F$ | 1480 | 1480 | 1480 | 1480 | 1480 | 1480 | 1480 | 1480 | 1480 | 1480 |
| Haftung | sehr gut | schlecht | gut | sehr gut | sehr gut | sehr gut | schlecht | schlecht | zieml. gut | ausge-zeichn. |
| Gebrannte Oberfläche | gut | gut | sehr gut | gut | gut | ausge-zeichn-net | sehr gut | sehr gut | sehr gut | sehr gut |

TES = Trockener elektrostatischer Spritzauftrag

TiCC = Übliche, mit $TiO_2$ getrübte Deckemailfritte, für TES hergestellt.

Alle Stahlunterlagen in allen Beispielen 0,912 mm (20 gauge).

Die Ergebnisse in den Tabellen I-A und II zeigen, daß die Verwendung von NiO im Mengenbereich von etwa 3 bis 7% zu ziemlich guter bis ausgezeichneter Haftung führt, wobei mit etwa 4 bis 7% wie im Falle von Beispiel 10 die Haftung am besten ist. Die Oberflächenbeschaffenheit der gebrannten Proben war in allen Fällen annehmbar. Ferner wurden bei Verwendung von Gemischen von CoO und NiO oder von CuO mit wenigstens etwa 20% CoO oder NiO in Mengenanteilen von insgesamt etwa 3 bis 7% gute bis sehr gute Haftung und Oberflächenbeschaffenheit erzielt.

## Beispiel 11

Die gemäß Beispiel 10 hergestellte Fritte wurde in der vorstehend beschriebenen Weise auf verschiedene Typen von kaltgewalztem Stahl von 0,912 mm (20 gauge) Dicke aufgetragen, die nur durch Reinigen und auch getrennt hiervon durch übliches Reinigen, Beizen und Vernickeln vorbehandelt worden waren. Als Stähle wurden emaillierbares Eisen und entkohlter Stahl ("Bethnamel", Hersteller Bethlehem Steel Corporation) verwendet. In allen Fällen waren ohne Rücksicht auf die Art der Vorbehandlung des Metalls die Haftung der Emails ausgezeichnet und die Oberflächenbeschaffenheit sehr gut bis ausgezeichnet. Zusätzlich wurden gleiche Proben zwei Bränden von je 3 Minuten bei $805^{\circ}C$ $(1480^{\circ}F)$ und einem Brand mit langsamem Aufheizen für 10 Minuten auf die gleiche Temperatur unterworfen. Diese Versuche mit erneutem Brand und einem Brand mit langsamem Aufheizen ergaben keine Verschlechterung der vorher festgestellten ausgezeichneten Haftung und Oberflächenbeschaffenheit und bestätigten, daß die Erfindung auf jeden Stahl, der üblicherweise für übliche Emaillierung verwendet wurde, anwendbar ist.

## Beispiel 12

Die gemäß Beispiel 10 hergestellte Fritte wurde im frisch gefritteten Zustand auf eine solche Feinheit naß gemahlen,

Mo 2072

daß etwa 7% auf einem 74 μm-Sieb (200 mesh) zurückblieben, wobei die Fritte in der folgenden typischen Grundemail-rezeptur enthalten war:

| | |
|---|---|
| Fritte (Beispiel 10) | 1000 g |
| Ball Clay | 70 g |
| Borax | 1,25 g |
| Bentonit | 2,5 g |
| $MgCO_3$ | 1,25 g |
| $NaNO_2$ | 0,625 g |
| $H_2O$ | 475 g |

Diese Emailmasse wurde durch Tauchauftrag mit etwa 269 g/m$^2$ (25 g/Quadratfuß) (Trockengewicht) auf kaltgewalzte Stahlbleche, die nur gereinigt worden waren, und ferner zum Vergleich auf in üblicher Weise gereinigte, gebeizte und vernickelte kaltgewalzte Stahlbleche aufgebracht. Die beschichteten Bleche wurden bei etwa 105$^o$C getrocknet und dann 5 Minuten bei 805$^o$C (1480$^o$F) und unter Verwendung gesonderter beschichteter Bleche auch bei 782$^o$C (1440$^o$F) und 827$^o$C (1520$^o$F) gebrannt. Die Schichtdicke betrug 1,016 mm (4 mils) nach dem Brennen. In allen Fällen waren die Haftung und die Oberflächenbeschaffenheit der nach diesem Naßtauchverfahren aufgebrachten und aufgeschmolzenen Emailschichten ausgezeichnet, ein Zeichen, daß die Erfindung sowohl beim trockenen elektrostatischen Spritzauftrag als auch bei Naßauftragsmethoden ohne jede Oberflächenvorbehandlung außer der Entfernung von Oberflächenschmutz und bei den wirtschaftlichsten Stählen, die heute verfügbar sind, nämlich handelsüblichen kaltgewalzten Stahltypen mit mäßigem Kohlenstoffgehalt, anwendbar ist.

Patentansprüche:

1. Verfahren zum Beschichten von sauberen, kaltgewalzten Stahlwerkstücken mit einer fest haftenden Emailschicht, dadurch gekennzeichnet, daß man auf die Oberfläche des Werkstücks durch trockenen elektrostatischen Spritzauftrag oder als nassen vermahlenen Schlicker eine Grundemailmasse aufbringt, die eine Fritte enthält, die bei Temperaturen zwischen etwa 675° und 1100°C schmelzbar ist und im wesentlichen aus Glasnetzwerkbildnern und Flußmitteln dafür besteht, einen niedrigen Gehalt an Material, das Eisenoxid des Trägermetalls ("indigenous iron oxide") liefert, aufweist, wenigstens ein oder mehrere haftungsfördernde Oxide von Nickel, Kobalt, Kupfer, Mangan oder Arsen in einem Anteil von etwa 3 bis 7 Gew.-% der Fritte enthält mit der Maßgabe, daß die Fritte zu wenigstens etwa 2 Gew.-% aus einem Haftoxid von Nickel, Kobalt oder einem Gemisch dieser Oxide besteht, und die die geschlossene Phase der Masse darstellende Fraktion unter solchen Bedingungen in Bezug auf Temperatur und Zeit aufschmilzt, daß die Masse in eine Emailschicht umgewandelt wird, während die Kristallisation einer wesentlichen Menge von gelöstem Eisenoxid in der Schicht ausgeschlossen wird.

2. Verfahren nach Anspruch 1, dadurch gekennzeichnet, daß man eine Fritte verwendet, die im wesentlichen aus einem Material mit einer theoretischen Nettoanalyse der Oxide innerhalb der folgenden Bereiche besteht:

Mo 2072

BAD ORIGINAL

- 24 -

| Oxid | Mengenbereich, Gew.-% |
|---|---|
| $SiO_2$ | 25 - 45 |
| $Na_2O$ | 10 - 30 |
| $K_2O$ | 0 - 5 |
| $Li_2O$ | 0 - 5 |
| $B_2O_3$ | 0 - 25 |
| CaO | 5 - 20 |
| BaO | 0 - 20 |
| $Al_2O_3$ | 0 - 20 |
| $Sb_2O_3$ | 0 - 6 |
| $P_2O_5$ | 0 - 5 |
| CoO | 0 - 8 |
| NiO | 0 - 8 |
| CuO | 0 - 6 |
| MnO | 0 - 6 |
| $As_2O_3$ | 0 - 6 |
| $MoO_3$ | 0 - 6 |
| ZnO | 0 - 5 |
| F | 0 - 5 |

wobei die Mengen der Oxide so gewählt sind, daß die Summe 100% beträgt.

3. Verfahren nach Anspruch 1 oder 2, dadurch gekennzeichnet, daß man eine Fritte verwendet, die ein Alkali- und Erdalkaliborsilicat ist, die Metallunterlage eine Dicke von wenigstens etwa 0,305 mm (30 gauge) hat, die aufgeschmolzene Dicke der Schicht wenigstens etwa 12,7 μm (0,5 mil) beträgt und die Emailschichtmasse nicht wesentlich mehr als etwa 0,1% (gerechnet als FeO) eines Eisenoxid der Unterlage liefernden Materials enthält.

4. Verfahren nach Anspruch 1 bis 3, dadurch gekennzeichnet daß das Aufschmelzen in einer Atmosphäre, die molekularen Sauerstoff enthält, während einer Zeit von nicht wesentlich mehr als etwa 30 Minuten bei einer Temperatur zwischen etwa 740° und 900°C erfolgt.

Mo 2072

5. Verfahren nach Anspruch 3, dadurch gekennzeichnet, daß man auf die aufgetragene Grundemailschicht vor ihrem Brennen eine Deckemailschichtmasse, die für die Verwendung in Verbindung mit der Grundemailschichtmasse in einem mit einem einzigen Brennvorgang durchgeführten Emaillierverfahren geeignet ist, aufträgt und die beiden Emailschichten gleichzeitig unter Bedingungen in bezug auf Temperatur und Zeit brennt, die die Umwandlung beider Emailschichten in einen mehrschichtigen Emailfilm bewirken, während sie die Kristallisation einer wesentlichen Menge von gelösten Eisenoxid in dem gebildeten mehrschichtigen Emailfilm ausschließen, wodurch eine erstarrte Außendeckschicht über dem Film gebildet wird, wobei die Gesamtdicke der Schichten wenigstens etwa 12,7 µm (0,5 mil) beträgt.

6. Verfahren nach Anspruch 3, dadurch gekennzeichnet, daß man nach dem Brennen eine Deckemailschichtmasse aufträgt und dann das Werkstück zum Aufschmelzen der Deckschicht erneut brennt, wobei die Gesamtdicke der Schichten wenigstens etwa 12,7 µm (0,5 mil) beträgt.

7. Verfahren nach Anspruch 3, dadurch gekennzeichnet, daß das Werkstück eine Dicke zwischen 4,935 mm (6 gauge) und 0,305 mm (30 gauge) hat.

8. Verfahren nach Anspruch 3, dadurch gekennzeichnet, daß die Grundemailschichtmasse im wesentlichen aus Fritte besteht.

9. Verfahren nach Anspruch 1, dadurch gekennzeichnet, daß man eine Grundemailschichtmasse verwendet, die aus 1 Teil der Fritte in Mischung mit bis zu 4 Teilen üblicher Emailfritte oder -fritten besteht.

Mo 2072

BAD ORIGINAL

10. Beschichtetes Werkstück in Blechform, hergestellt
    nach dem Verfahren gemäß Anspruch 1.

0018559

Europäisches Patentamt

EUROPÄISCHER RECHERCHENBERICHT

Nummer der Anmeldung

EP 80102094.2

| Kategorie | EINSCHLÄGIGE DOKUMENTE | | KLASSIFIKATION DER ANMELDUNG (Int Cl³) |
|---|---|---|---|
| | Kennzeichnung des Dokuments mit Angabe soweit erforderlich, der maßgeblichen Teile | betrifft Anspruch | |
| | GB - A - 960 350 (EAGLE-PICHER)<br>* Gesamt *<br>--<br>DE - A1 - 2 519 890 (FERRO)<br>* Gesamt, insbes.Seite 27 *<br>---- | 1-4, 7<br><br>1,2 | C 23 D 5/00<br>C 03 C 7/02<br><br><br>RECHERCHIERTE SACHGEBIETE (Int. Cl³)<br><br>C 23 D<br>C 03 C<br><br><br>KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

| X | Der vorliegende Recherchenbericht wurde für alle Patentansprüche erstellt. | | |
|---|---|---|---|
| Recherchenort<br>WIEN | Abschlußdatum der Recherche<br>16-06-1980 | Prüfer<br>HAUSWIRTH | |

EPA form 1503.1  06.78